# EUROPÄISCHE PATENTSCHRIFT

(11) **EP 1 619 420 B1**
(45) Veröffentlichungstag und Bekanntmachung des Hinweises auf die Patenterteilung: **20.01.2010**
(21) Anmeldenummer: 05012179.7
(22) Anmeldetag: 07.06.2005
(51) Int. Cl.: F16H 57/04, F16H 1/14, F16H 55/17

(54) **Zahnrad mit Schmiermittel-Leitblech**
Gear with lubrication baffle plate
Engrenage avec déflecteur de lubrifiant

(30) Priorität: 23.07.2004 DE 202004011546 U
(43) Veröffentlichungstag der Anmeldung: 25.01.2006
(73) Patentinhaber: AS-Antriebstechnik und Service GmbH, 48734 Reken (DE)
(72) Erfinder: Kaspari, Gerd, Dipl.-Ing., 48653 Coesfeld (DE); Hesterwerth, Heinz, Dipl.-Ing., 48734 Reken (DE)
(74) Vertreter: Habbel, Ludwig

(56) Entgegenhaltungen:
- DE-A1- 1 911 612
- DE-B- 1 273 914
- JP-A- 9 236 167
- US-A- 5 064 025

## Beschreibung

Die Erfindung betrifft ein Zahnrad nach dem Oberbegriff des Anspruchs 1. Ein solches Zahnrad ist aus der DE 1 911 612 bekannt.

Die Führung des Schmiermittels durch Bohrungen, welche ggf. durch eine Welle und anschließend durch das Zahnrad in die Nähe der Zähne des Zahnrads verlaufen, ist aus der Praxis bekannt. Im Vergleich zur Führung des Schmiermittels durch eigene Schmiermittel-Rohrleitungen und ggf. Schmiermittel-Spritzdüsen ist eine platzsparende Schmiermittelführung auf diese Weise möglich.

Dabei ist beabsichtigt, dass das Schmiermittel, wenn es an der Oberfläche des Zahnrades aus der Austrittsöffnung der Schmiermittelbohrung austritt, durch Fliehkraft nach außen gedrängt wird um zu den Zähnen zu gelangen und diese zu schmieren. Je nach den vorgesehenen Betriebsbedingungen des Zahnrades kann jedoch ggf. eine Unterversorgung mit Schmiermittel erfolgen, wenn nämlich das Schmiermittel nicht entlang dem Material des Zahnrades in die Zahnzwischenräume verläuft, sondern auf Grund der Fliehkraft vorzeitig vom Zahnrad abgeschleudert wird.

Sowohl niedrige Drehzahlen des Zahnrades, die zu einem nicht ausreichenden fliehkraftbedingten Transport des Schmiermittels zu den Zähnen führen können, als auch hohe Drehzahlen können daher eine Unterversorgung des Zahnrades mit Schmiermittel verursachen.

Bei den gattungsgemäßen Zahnrädern ist daher nachteilig, dass sie nur in einem begrenzten Drehzahlbereich optimal mit Schmiermittel versorgt werden und dementsprechend verschleißarm betrieben werden können. Das Einhalten dieses Drehzahlbereichs kann in der Praxis nicht immer sichergestellt werden.

Der Erfindung liegt die Aufgabe zugrunde, ein gattungsgemäßes Zahnrad dahingehend zu verbessern, dass dieses eine zuverlässige Schmierung auch bei ungünstig hohen Drehzahlen des Zahnrades sicherstellt.

Diese Aufgabe wird durch ein Zahnrad mit den Merkmalen des Anspruchs 1 gelöst.

Die Erfindung schlägt mit anderen Worten vor, das Schmiermittel auch in dem Bereich von der Austrittsöffnung des Schmiermittels an der Oberfläche des Zahnrades bis zu den Zähnen weiterhin zu führen. Hierzu ist ein Leitblech vorgesehen, welches verhindert, dass das Öl fliehkraftabhängig vom Zahnrad abgeschleudert wird, bevor es an die Zähne gelangt und dort in die Zahnzwischenräume eintritt. Hierdurch kann erstens eine ausreichende Schmiermittelversorgung auch bei zuvor unzulässig hohen Drehzahlen sichergestellt werden. Hierdurch kann zudem die Schmiermittelversorgung konstruktiv so ausgelegt werden, dass sie bereits bei niedrigen Drehzahlen einen ausreichenden Schmiermitteltransport zu den Zähnen des Zahnrades sicherstellt, ohne dass hierdurch höhere Drehzahlen zu einem vorzeitigen, fliehkraftbedingten Abriss des Schmiermittelflusses führen würden. Der Drehzahlbereich, in dem das Zahnrad vorschriftsmäßig geschmiert wird, kann daher vorschlagsgemäß sowohl zu niedrigen als auch zu hohen Drehzahlen erweitert werden.

Vorteilhaft kann in besonders einfacher Ausgestaltung des Leitblechs dieses grundsätzlich glattflächig ausgestaltet sein und lediglich an seinem zu den Zähnen gerichteten Rand auf Stufen aufliegen, so dass zwischen den Stufen Auslässe geschaffen werden, welche das Schmiermittel zuverlässig zwischen die Zähne des Zahnrades führen. Die Stufen können beispielsweise durch das Leitblech selbst gebildet werden, beispielsweise indem strahlenartige Fortsätze des eigentlichen Leitblechs abgewinkelt werden und der Oberfläche des Zahnrads anliegen. Diese Fortsätze bewirken einen Abstand zwischen dem eigentlichen Leitblech und der Oberfläche des Zahnrads und schaffen gleichzeitig die Auslässe zwischen sich.

In besonders einfacher Ausgestaltung können die vorerwähnten Stufen durch die Zähne selbst gebildet werden, beispielsweise im Bereich des Zahnfußes. Wenn das Leitblech auf diesen Stufen aufliegt, schaffen die Zwischenräume zwischen benachbarten Zähnen automatisch die Auslässe für das Schmiermittel.

Bei der Ausgestaltung des Zahnrades beispielsweise mit bogenverzahnten Zähnen bewirkt deren gebogener Verlauf automatisch einen zuverlässigen Kontakt des Schmiermittels mit der Zahnflanke, wenn das Schmiermittel radial nach außen gerichtet unterhalb des Leitblechs bzw. aus dessen Auslässen austritt. Um auch bei anderen Zahnformen das Schmiermittel zuverlässig gegen die Zahnflanken zu führen, kann eine entsprechende Profilierung des Leitblechs vorgesehen sein, beispielsweise durch eingeprägte, gefräste oder anderweitig erzeugte Rillen bzw. durch entsprechend verlaufende Stege an der Oberfläche des Leitblechs, die dem Schmiermittel zugewandt ist. Abweichend von einem rein radial zur Mittelachse des Zahnrads verlaufenden Anordnung derartiger Profilierungen können diese schräg oder gebogen verlaufen und auf diese Weise das Schmiermittel in einer Richtung an den Austrittsöffnungen austreten lassen, die das Schmiermittel in einem Winkel gegen die Zahnflanken führt und somit eine zuverlässige Benetzung der Zahnflanken mit dem Schmiermittel sicherstellt.

Vorteilhaft kann das Leitblech als umlaufender Ring ausgestaltet sein. Auf diese Weise kann das Leitblech nicht nur im Vergleich zur fliehkraftbedingten Strömungsrichtung des Schmiermittels eine Umlenkung des Schmiermittels bewirken, sondern es kann gleichzeitig auch eine Verteilung des Schmiermittels um den gesamten Umfang des Zahnrades sicherstellen, selbst wenn nur wenige Schmiermittelbohrungen vorgesehen sind, beispielsweise nur eine einzige oder zwei Schmiermittelbohrungen über den Umfang des Zahnrads verteilt vorgesehen sind.

Vorteilhaft kann das Zahnrad als Kegelrad ausgestaltet sein. Die im Vergleich zum Umfang des Zahnrads schräge Anordnung der einzelnen Zähne unterstützt vorteilhaft eine zuverlässige und vollständige Benetzung der Zahnflanken mit dem Schmiermittel.

Ein Ausführungsbeispiel der Erfindung wird anhand der rein schematischen Zeichnungen nachfolgend näher erläutert, dabei zeigt
- Fig. 1: ein als Kegelrad ausgestaltetes Zahnrad und
- Fig. 2: einen Schnitt auf ein Leitblech und
- Fig. 3: eine Draufsicht auf das Leitblech von Fig. 2.

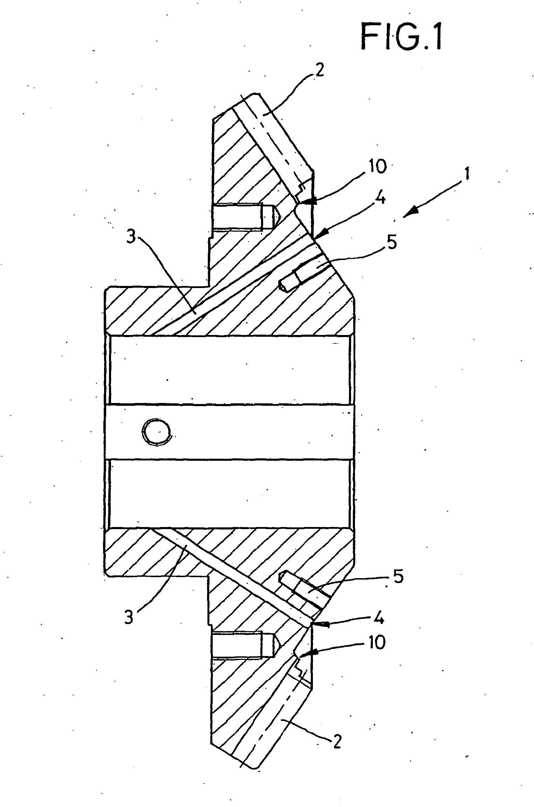

In Fig. 1 ist mit 1 ein Zahnrad bezeichnet, welches als Kegelrad ausgestaltet ist und eine Vielzahl von Zähnen 2 aufweist. Durch das Zahnrad 1 erstrecken sich zwei Schmiermittelbohrungen 3, welche das Schmiermittel zu Austrittsöffnungen 4 führen. Die Schmiermittelbohrungen 3 verlaufen dabei von der Mitte des Zahnrades schräg nach außen zur Austrittsöffnung 4, so dass jeweils durch die Fliehkraft unterstützt das Schmiermittel zur Austrittsöffnung 4 gelangt.

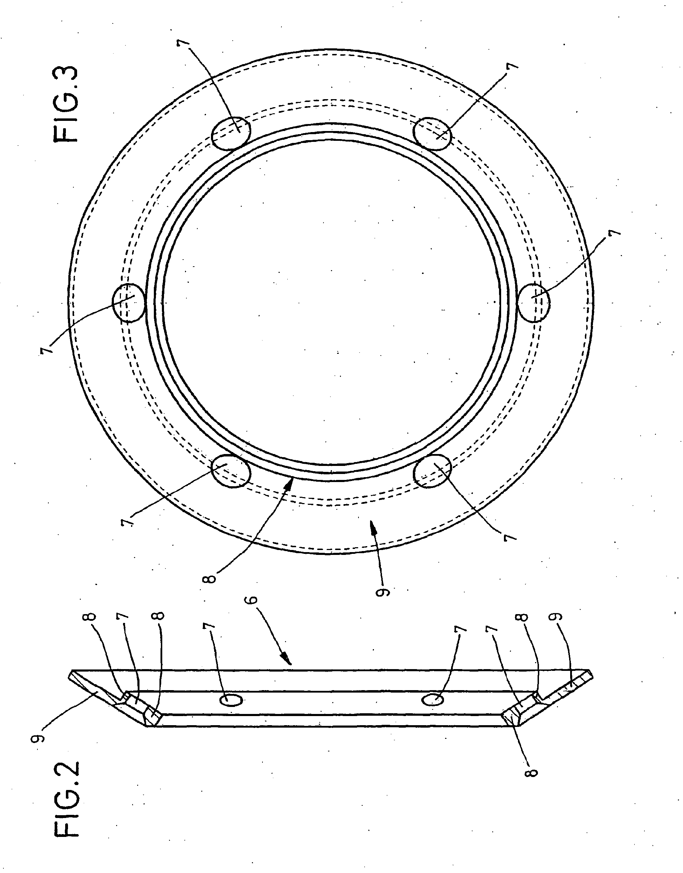

Würde der weitere Verlauf des Schmiermittels ausschließlich der Fliehkraft überlassen, so würde lediglich ein vergleichsweise geringer Anteil des Schmiermittels entlang der Oberfläche des Zahnrades 1 fließen und zu den Zähnen 2 gelangen, während ein unerwünscht großer Anteil des Schmiermittels durch die Fliehkraft vom Zahnrad 1 abgeschleudert würde. Daher kann mit Hilfe von Gewindebohrungen 5 ein aus den Fig. 2 und 3 ersichtliches Leitblech 6 auf dem Zahnrad 1 befestigt werden. Das Leitblech 6 ist - wie insbesondere aus Fig. 3 ersichtlich ist - als Ring ausgestaltet und mit mehreren Schraubenöffnungen 7 versehen, die sich durch einen zentralen, als Sockel 8 bezeichneten Bereich des Leitblechs 6 erstrecken, wobei das Leitblech im Bereich dieses Sockels 8 eine vergleichsweise größere Dicke aufweist.

Vom Sockel 8 erstreckt sich radial nach außen eine Leitfläche 9 des Leitblechs 6, so dass zwischen dieser Leitfläche 9 und der Oberfläche des Zahnrades 1 ein Zwischenraum als ringförmiger Führungs- und Verteilungsspalt geschaffen wird, der durch das an den beiden Austrittsöffnungen 4 austretende Schmiermittel ausgefüllt wird. Das Leitblech 6 erstreckt sich mit seiner Leitfläche 9 bis zu den Zähnen 2 des Zahnrades 1, wobei die Zähne 2 eine Stufe 10 aufweisen, auf welcher das Leitblech 6 mit dem äußersten umlaufenden Rand seiner Leitfläche 9 aufliegt.

Der ringförmige, umlaufende Auslassspalt, der sich zwischen Zahnrad 1 und der Leitfläche 9 des Leitblechs 6 ergibt, ist also zu einem erheblichen Anteil seiner Umfangslänge durch die Zähne 2 abgedeckt. Das Schmiermittel, welches aus den Schmiermittelbohrungen 3 an den Austrittsöffnungen 4 austritt, kann daher nicht ungehindert radial unterhalb des Leitbleches 6 ausströmen, sondern staut sich vielmehr und verteilt sich gleichmäßig unterhalb der Leitfläche 9 über den ganzen Umfang des Leitbleches 6. Es stellt auf diese Weise eine gleichmäßige Schmierung für sämtliche Zähne 2 sicher.

Bei dem dargestellten Ausführungsbeispiel ist die Leitfläche 9 des Leitblechs 6 an ihrer Unterseite, das heißt an ihrer zum Zahnrad 1 gerichteten und mit dem Schmiermittel in Kontakt kommenden Oberfläche glatt ausgestaltet. Abweichend davon kann eine Profilierung vorgesehen sein, die dem Schmiermittel beispielsweise einen Drall verleiht und es schräg gegen die Flanken der Zähne 2 gerichtet austreten lässt.

## Patentansprüche

1. Zahnrad (1), mit einer Schmiermittelbohrung (3), wobei die Schmiermittelbohrung (3) eine Austrittsöffnung (4) nahe den Zahnfüßen des Zahnrades (1) aufweist,
**gekennzeichnet durch**
ein Leitblech (6), welches vor der Austrittsöffnung (4) der Schmiermittelbohrung (3) vorgesehen ist
und eine Umlenkung des Schmiermittels bewirkend angeordnet ist,
derart, dass das Schmiermittel abweichend von einer **durch** die Fliehkraft bestimmten Strömungsrichtung zwischen die Zähne (2) des Zahnrades (1) geführt wird.

2. Zahnrad nach Anspruch 1, **dadurch gekennzeichnet,**
**dass** das Leitblech (6) an seinem zu den Zähnen weisenden Rand auf mehreren Stufen aufliegt, wobei zwischen jeweils zwei benachbarten Stufen Auslässe für das Schmiermittel geschaffen sind.

3. Zahnrad nach Anspruch 2, **dadurch gekennzeichnet,**
**dass** die Zähne (2) jeweils eine Stufe (10) aufweisen, wobei das Leitblech (6) auf den Stufen (10) mehrerer Zähne (2) aufliegt, einen Zwischenraum freilassend, welcher von der Austrittsöffnung (4) des Schmiermittels bis zwischen die Stufen (10) und die dort vorgesehenen Auslässe führt.

4. Zahnrad nach einem der Ansprüche 2 oder 3,
**gekennzeichnet durch** eine Profilierung der zum Schmiermittel ausgerichteten Oberfläche des Leitblechs (6), derart, dass das Schmiermittel schräg auf die Zahnflanken gerichtet aus den Auslässen austritt.

5. Zahnrad nach einem der vorhergehenden Ansprüche,
**dadurch gekennzeichnet, dass** das Leitblech (6) als umlaufender Ring ausgestaltet ist.

6. Zahnrad nach einem der vorhergehenden Ansprüche,
**dadurch gekennzeichnet, dass** das Zahnrad (1) als Kegelrad ausgestaltet ist.

## Claims

1. Gear (1),
having a lubricant hole (3), where the lubricant hole (3) incorporates an outlet (4) near the roots of the teeth of the gear (1),
**characterised by**
a baffle plate (6) provided for in front of the outlet (4) of the lubricant hole (3)
and disposed so as to deflect the lubricant
so that the lubricant is made to flow between the teeth (2) of the gear (1) in a direction differing from that determined by centrifugal force.

2. Gear in accordance with claim 1, **characterised in that** the baffle plate (6) at its edge directed towards the teeth rests on a number of steps, where outlets are created for the lubricant between two adjacent steps.

3. Gear in accordance with claim 2, **characterised in that** the teeth (2) each incorporate a step (10), where the baffle plate (6) rests on the steps (10) of a number of teeth (2), leaving a gap which runs from the outlet (4) for the lubricant to between the steps (10) and the outlets provided for there.

4. Gear in accordance with any of claims 2 and 3, **characterised in that t**he surface of the baffle plate (6) which is directed towards the lubricant is shaped so that the lubricant emerges from the outlets at an angle in the direction of the tooth flanks.

5. Gear in accordance with any of the foregoing claims, **characterised in that** the baffle plate (6) is constructed in the form of a ring going all the way round.

6. Gear in accordance with any of the foregoing claims, **characterised in that** the gear (1) is constructed as a bevel gear.

## Revendications

1. Engrenage (1),
avec un alésage (3) pour lubrifiant, ledit alésage (3) pour lubrifiant présentant un orifice de sortie (4) proche des pieds de dent de l'engrenage (1)
**caractérisé par**
un déflecteur (6) prévu devant l'orifice de sortie (4) de l'alésage (3) pour lubrifiant et agencé de sorte à provoquer un renvoi du lubrifiant,
de sorte que le lubrifiant, dérogeant à un sens d'écoulement conditionné par la force centrifuge, se retrouve guidé entre des dents (2) de l'engrenage (1).

2. Engrenage selon la revendication 1, **caractérisé en ce que** le déflecteur (6) applique par son bord regardant les dents sur plusieurs gradins, sachant que des orifices de sortie du lubrifiant ont été ménagés chaque fois entre deux gradins voisins.

3. Engrenage selon la revendication 2, **caractérisé en ce que** les dents (2) présentent chacune un gradin (10), le déflecteur (6) appliquant sur les gradins (10) de plusieurs dents (2), tout en laissant libre un espace intermédiaire conduisant de l'orifice de sortie (4) du lubrifiant jusque entre les gradins (10) et les orifices de sortie qui y sont prévus.

4. Engrenage selon l'une des revendications 2 ou 3, **caractérisé en ce que** la surface du déflecteur (6) présente un profil orienté sur le lubrifiant de sorte que ce dernier sort, par les orifices, orienté en biais sur les flancs des dents.

5. Engrenage selon l'une des revendications précédentes, **caractérisé en ce que** le déflecteur (6) a été configuré en anneau circonférentiel.

6. Engrenage selon l'une des revendications précédentes, **caractérisé en ce que** l'engrenage (1) est configuré en engrenage conique.
